# EUROPEAN PATENT APPLICATION

(11) **EP 1 271 400 A1**
(43) Date of publication of application: **02.01.2003**
(21) Application number: 02077369.3
(22) Date of filing: 17.06.2002
(51) Int. Cl.: G06T 1/00, G06T 17/00

(54) **A method and system for authenticating playback of an animated model**

(30) Priority: 28.06.2001 US 893953
(71) Applicant: EASTMAN KODAK COMPANY (a New Jersey corporation), Rochester, New York 14650 (US)
(72) Inventor: Stephany, Thomas M., c/o Eastman Kodak Company, Rochester, New York 14650-2201 (US); Squilla, John R., c/o Eastman Kodak Company, Rochester, New York 14650-2201 (US)
(74) Representative: Haile, Helen Cynthia

(57) **Abstract**

A method for authenticating playback of animated content of an object, the method comprises the steps of receiving a wire mesh having a plurality of line segments for describing the object; receiving texture data which describes a covering for the wire mesh; receiving movement data for directing movement of the wire mesh; (d) receiving a decrypted version of the movement data; (e) comparing the movement data and encrypted movement data for verifying that the movement data is substantially the same as the encrypted movement data which verification determines security status of the animated object; and (f) indicating first and second levels of security status for indicating a result of the comparison step.

## Description

The present invention relates to producing and transmitting animation and, more particularly, to indicating to a user the degree of certainty that the animation has not been modified or tampered with during such transmission.

Animation typically includes a three-dimensional wire mesh produced from an image and a texture model that represents the visual features associated with the wire mesh. A set of movement instructions is produced for directing movement of the wire mesh. When the instructions are input to the wire mesh having the texture model residing thereon, a three-dimensional moving image is produced. Typically, the wire mesh, texture model and instructions are then sent to a customer for their entertainment and/or use.

Although the presently known and utilized animation creation and transmission components are satisfactory, they include drawbacks. The user, however, does not have any indication of whether the animation has been tampered with during transmission, and consequently, may not be viewing the desired animation.

Consequently, a need exists for a secure method for transmitting such animation that is essentially tamper-proof.

The present invention is directed to overcoming one or more of the problems set forth above. Briefly summarized, according to one aspect of the present invention, the invention resides in a method for authenticating playback of animated content of an object, the method comprising the steps of (a) receiving a wire mesh having a plurality of line segments for describing the object; (b) receiving texture data which describes a covering for the wire mesh; (c) receiving movement data for directing movement of the wire mesh; (d) receiving a decrypted version of the movement data; (e) comparing the movement data and encrypted movement data for verifying that the movement data is substantially the same as the encrypted movement data which verification determines security status of the animated object; and (f) indicating first and second levels of security status for indicating a result of the comparison step.

The above and other objects of the present invention will become more apparent when taken in conjunction with the following description and drawings wherein identical reference numerals have been used, where possible, to designate identical elements that are common to the figures.

The present invention has the advantage and object of indicating to a user the degree of certainty whether or not the animation has been tampered with during transmission.

The present invention includes the feature of an indicator for indicating at least two levels of security status for the animation.

These and other aspects, objects, features and advantages of the present invention will be more clearly understood and appreciated from a review of the following detailed description of the preferred embodiments and appended claims, and by reference to the accompanying drawings.
Fig. 1 is a perspective view of a digital camera of the present invention;
Fig. 2 is a diagram of an animation processor and a corresponding flow chart illustrating creation of a typical animation from the processor;
Fig. 3 is a process flowchart illustrating the method of the present invention for securely transmitting an animation;
Fig. 4 is a perspective view of a typical wire mesh produced from the processor; and
Fig. 5 is a flowchart illustrating a software program implemented in a player for authenticating the animation.

In the following description, a portion of the present invention will be described in the preferred embodiment as a software program. Those skilled in the art will readily recognize that the equivalent of such software may also be constructed in hardware.

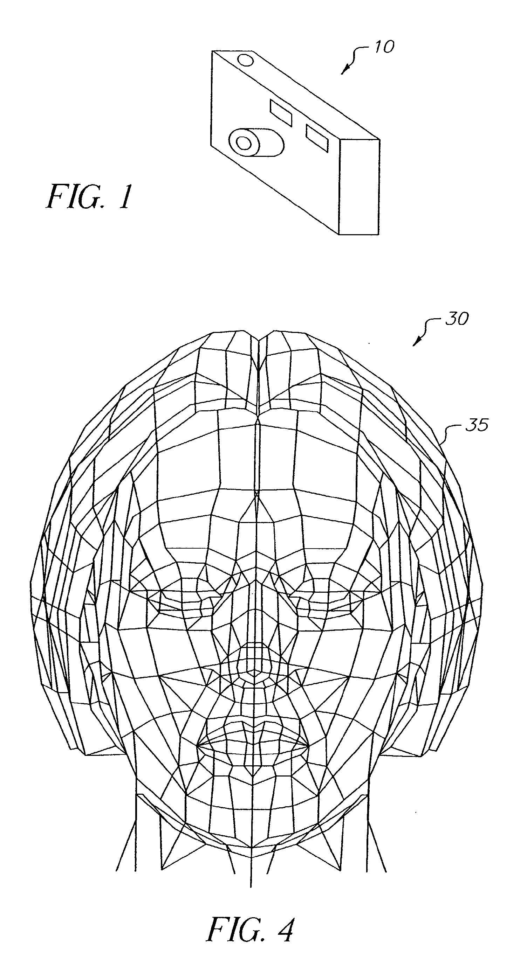

Referring to Fig. 1, there is shown a digital camera 10 for capturing digital images. The digital camera 10 includes an image sensor (not shown) for capturing the incident light and converted it into electronic signals. Such digital cameras 10 are well known in the art and will not be discussed further detail herein. Similarly, it should be understood by those skilled in the art that the camera 10 could also be a film-based camera whose images are digitized for animation after processing of the film.

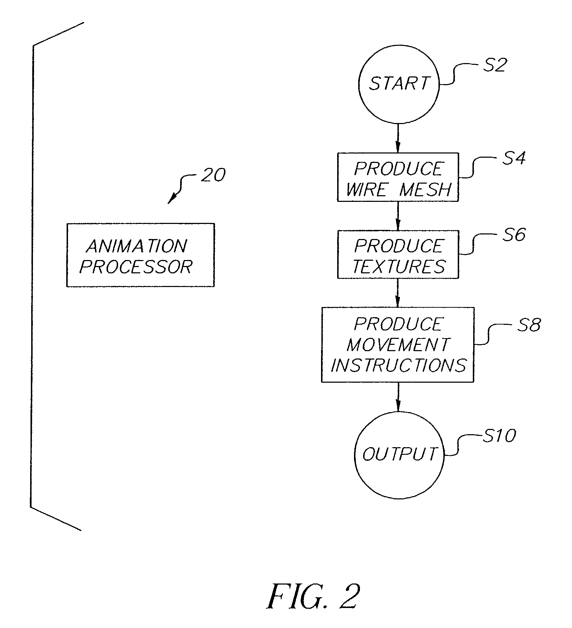

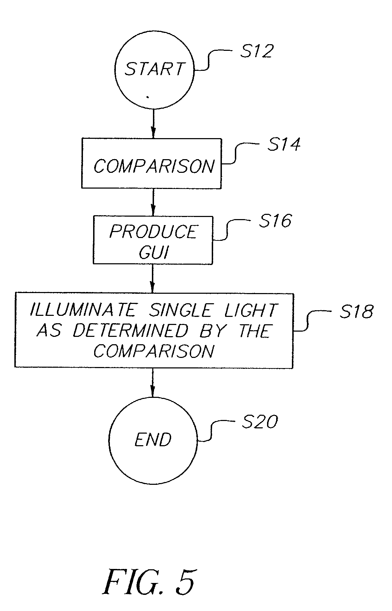

Referring to Fig. 2, there is shown an animation processor 20 and a flow chart for producing the animation. As is well known to those skilled in the art, the animation processor 20 includes electronic components therein for producing wire mesh, texture (or skinning) information and movement instructions for the animation. In this regard, the animation process is initiated S2, and the processor 20 produces S4 a three-dimensional wire mesh 30 from the digital image input by the user. Referring briefly to Fig. 4, the wire mesh 30 is a plurality of interconnecting segments 35 that forms a model of the exterior shape of the input image. Referring back to Fig. 2, the processor 20 further analyzes the input image, and produces S6 a texture model for each image for producing a digital representation of the exterior, visible features of the image. The user will instruct the animation processor 20 as to the particular movements desired for the image. From these instructions, the animation processor 20 produces S8 movement data that directs the individual segments of the wire mesh to deform thus producing movement. The animation processor 20 outputs S10 the wire mesh, texture and corresponding movement instructions to the user in a file structure. This process may be repeated for a subsequent image or simply produce different movement instructions for an existing wire frame.

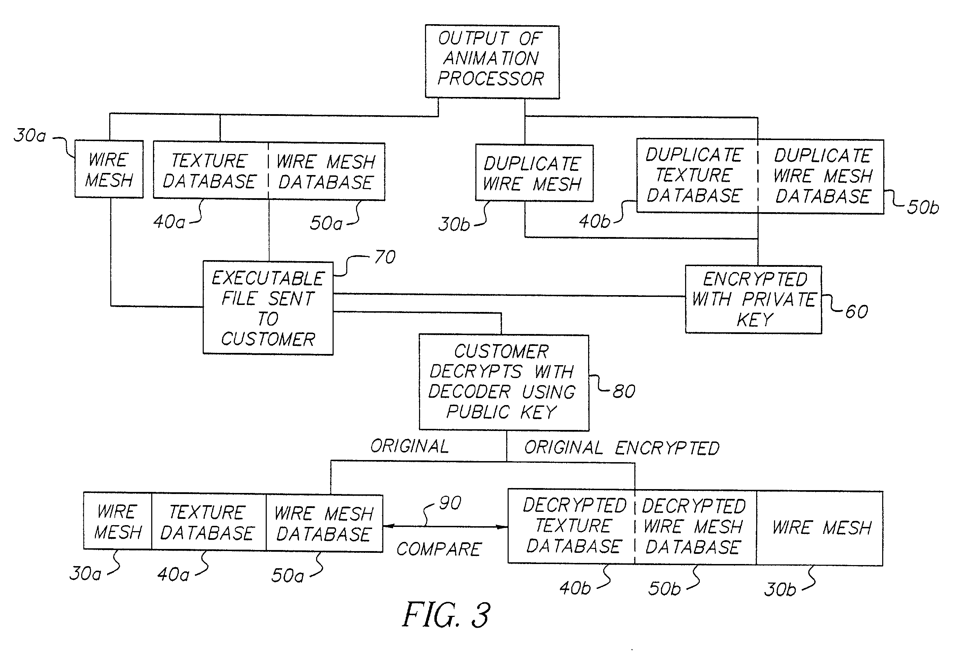

Referring to Fig. 3, there is shown a flow diagram of the present invention for sending the wire mesh 30a, texture database 40a, and movement instructions (wire mesh database) 50a to a user which ensures all of these components have not been modified or altered during transmission. In this regard, the wire mesh 30a, textured database 40a and movement instructions 50a produced by the animation processor is sent to a user, such as via the Internet or manual distribution and the like. The sender then encrypts the texture database 40b, wire mesh 30b and wire mesh database 50b with a private key 60 for producing a secure executable file 70 which is essentially tamper proof. The sender may send this encryption via any suitable means, such as via the Internet or manual distribution and the like, or it may be send as an attachment to the unencrypted file.

The receiver of the digital files then decrypts 80 the texture database 40b, wire mesh 30b and wire database 50b with a public key. The public key may be sent to the user by the sender, or may be retrieved from publicly accessible facilities, such as the Internet and the like. As well known to those skilled in the art, the public key may only decrypt the digital files, whereas the private key can encrypt and decrypt. Such encryption and decryption technology is well known in the art and will not be discussed in detail herein. The customer then compares 90 the decrypted texture 40b, wire mesh 30b and wire database 50b with the originally received texture database 40a, wire mesh 30a and wire database 50a.

Referring to Fig. 5, there are shown details of the comparison step 90 that are preferably implemented in software on a computer. Upon initiating of the comparison software code S12, a comparison is performed S14 by a computer or player 100 executing code of the present invention for determining the level of security of the animation. The software code produces S16 a graphical user interface (GUI), including a plurality of lights, on a monitor of the computer. The software code will then illuminate S18 a single light from the plurality of lights displayed on the monitor for indicating security status as determined by the comparison. For example, a yellow light will indicate S18 that the security status of the animation is questionable due to a predetermined number of errors (between 1 and a predetermined limit n, as determined by the user depending on the desired level of security) occurs in the comparison of the two sets of databases. A red light will indicate S18 that the animation has been modified, or security has been compromised, due to the number of errors in the two databases being between greater than predetermined limit, n. A green light will indicate S18 that the animation is definitely secure or unmodified, or in other words, there are zero errors between the two sets of databases. The code is then terminated S20.

In an alternative embodiment, in lieu of encrypting the duplicate wire mesh 30b, duplicate texture database 40b and duplicate wire mesh database (collectively referred to as duplicates), each or any one of these could be "hashed" and then encrypted before sending to the customer. In this regard, hashing includes passing all or each of the desired duplicates through an algorithm for converting it into a unique smaller representation, for example a checksum, which is well known in the art. This checksum is then encrypted and sent to the customer where the checksum is decrypted.

The customer then passes the corresponding original (either or all of the wire mesh 30a, texture database 40a and wire mesh 50a) through the same hashing algorithm for obtaining a corresponding smaller unique representation, or checksum. As is well known in the art, any alteration of data that is subsequently hashed results in a different checksum from a checksum of the unaltered data, which obviously indicates the data has been altered. The user or customer then compares the two checksums for verifying whether the data has been altered.

## Claims

1. A method for authenticating playback of animated content of an object, the method comprising the steps of:
(a) receiving a wire mesh having a plurality of line segments for describing the object;
(b) receiving texture data which describes a covering for the wire mesh;
(c) receiving movement data for directing movement of the wire mesh;
(d) receiving a decrypted version of the movement data;
(e) comparing the movement data and encrypted movement data for verifying that the movement data is substantially the same as the encrypted movement data which verification determines security status of the animated object; and
(f) indicating first and second levels of security status for indicating a result of the comparison step.

2. The method as in claim 1 further comprising receiving an encrypted version of the texture data and comparing the texture data and the encrypted version of the texture data.

3. The method as in claim 2 further comprising receiving an encrypted version of the wire mesh and comparing the wire mesh and the encrypted version of the wire mesh.

4. The method as in claim 1 further comprising indicating a third security indicator which indicates that origin is uncertain, and wherein step (f) includes indicating the first security level as originating from the predetermined source and the second security level as originating from a source other than the predetermined source.

5. A player for authenticating playback of animated content of an object, the player comprising:
(a) a receiving element for receiving a wire mesh having a plurality of line segments for describing the object;, texture data which describes a covering for the wire mesh; and movement data for directing movement of the wire mesh;
(b) a decrypting device for decrypting a decrypted version of the movement data;
(c) a comparison element for comparing the movement data and encrypted movement data for verifying that the movement data is substantially the same as the encrypted movement data which verification determines security status of the animated object; and
(d) an indicator for indicating first and second levels of security status for indicating a result of the comparison step.

6. The player as in claim 5, wherein the decrypting device receives an encrypted version of the texture data and the comparison element compares the texture data and the encrypted version of the texture data.

7. The player as in claim 6, wherein the decrypting device receives an encrypted version of the wire mesh and the comparison element compares the wire mesh and the encrypted version of the wire mesh.

8. The player as in claim 5, wherein the indicator indicates a third security indicator which indicates that origin is uncertain, and wherein the first security level as originating from the predetermined source and the second security level as originating from a source other than the predetermined source.
